Europäisches Patentamt

European Patent Office

Office européen des brevets

(19)

(11) Veröffentlichungsnummer: **0 155 375
B1**

(12) **EUROPÄISCHE PATENTSCHRIFT**

(45) Veröffentlichungstag der Patentschrift:
**20.04.88**

(51) Int. Cl.⁴: **G 21 C 17/00**

(21) Anmeldenummer: **84115086.5**

(22) Anmeldetag: **10.12.84**

(54) **Manipulator zur Prüfung von oben offenen Druckbehältern.**

(30) Priorität: **16.02.84 DE 3405851**

(43) Veröffentlichungstag der Anmeldung:
**25.09.85 Patentblatt 85/39**

(45) Bekanntmachung des Hinweises auf die Patenterteilung:
**20.04.88 Patentblatt 88/16**

(84) Benannte Vertragsstaaten:
**BE CH DE FR LI NL SE**

(56) Entgegenhaltungen:
**DE - A - 2 154 015
DE - A - 2 544 009
DE - A - 2 547 472
DE - B - 2 325 388
FR - A - 2 242 750
FR - A - 2 259 419**

(73) Patentinhaber: **Siemens Aktiengesellschaft Berlin und München, Wittelsbacherplatz 2, D-8000 München 2 (DE)**

(72) Erfinder: **Bauer, Rainer, Fasanenweg 23a, D-8522 Herzogenaurach (DE)**
Erfinder: **Kastl, Hans, Widerlichstrasse 13, D-8520 Erlangen (DE)**

### Beschreibung

Die Erfindung liegt auf dem Gebiet der fernbedienbaren Einrichtungen zur Handhabung von Mess-, Prüf-, Inspektions- und Reparaturvorrichtungen in für den Menschen schwer oder nur unter erschwerten Bedingungen direkt zugänglichen Bereichen und ist bei der konstruktiven Ausgestaltung eines Manipulators anzuwenden, der im Inneren eines oben offenen Reaktordruckbehälters eingesetzt wird und im wesentlichen aus einem feststehenden, in den Druckbehälter ragenden Mast und aus einem am Mast verfahrbaren Support mit darauf befestigtem Tragorgan für eine Mess-, Prüf-, Inspektions- oder Reparatureinrichtung besteht.

Bei einem bekannten Manipulator für den Druckbehälter eines Kernreaktors ist der Mast am Boden des Druckbehälters abgestellt und wird an seinem oberen Ende mittels einer Manipulatorkatze gehalten, die in der oberen Plattform einer Manipulatorbrücke verankert ist. Die Manipulatorbrücke sitzt ihrerseits verfahrbar auf einer Hilfsbrücke auf, die im Reaktorgebäude abgestützt ist. An dem feststehend angeordneten Mast befindet sich ein Support, der mittels einer Lasthebeeinrichtung in Längsrichtung des Mastes verfahrbar ist. Die hierzu vorgesehene Seilwinde besteht aus zwei tangential und symmetrisch zum Mast angeordneten Seiltrommeln, deren freie Seilenden am Support befestigt sind. Das eine Seil ist dabei um eine Umlenkrolle am Mastfuss geführt. Der Support trägt im übrigen einen horizontal verlaufenden Arm, der in Längsrichtung verschiebbar sowie um seine eigene Achse drehbar ist. Am freien Ende des Armes können Reparatur- und Überwachungseinrichtungen angeordnet werden (DE-B-2 325 388).

Bei einem anderen bekannten Manipulator dieser Art besteht der Support aus einem den Mast auf seiner ganzen Länge umgebenden Rohr, das in der tischartig ausgebildeten Manipulatorbrücke drehbar gelagert ist. In der Manipulatorbrücke sind weiterhin Antriebe zur axialen Verschiebung des Rohres angeordnet. Diese greifen über Ritzel in eine auf der Aussenseite des Rohres angebrachte Verzahnung ein. An dem als Rohr ausgebildeten Support ist weiterhin ein Ausleger befestigt, der in Längsrichtung verschiebbar und um eine horizontale Achse schwenkbar ausgebildet ist. Die hierzu vorgesehenen Antriebe werden über Energie- und Steuerkabel versorgt, die von einer auf der Manipulatorbrücke angeordneten und von einem Elektromotor angetriebenen Kabeltrommel abgewickelt werden (DE-A-2 547 472).

Bei einem anderen bekannten Manipulator ist der Mast hängend in der Manipulatorbrücke gelagert und wird von dort aus sowohl um seine Achse verdreht als auch (mittels eines Seilzuges) in Achsrichtung verschoben. Der demzufolge ohne speziellen Support am Mast befestigte Ausleger für die Prüfgeräte wird u. a. mit Seiltrieben betätigt, die innerhalb des Mastes angeordnet sind (DE-B-2 154 015).

Ausgehend von einem Manipulator mit den Merkmalen des Oberbegriffes des Anspruches 1 (DE-B-2 325 388) liegt der Erfindung die Aufgabe zugrunde, die Antriebseinrichtung für den Support und die Energieversorgung für die auf den Support angeordneten Aggregate so auszugestalten, dass für den Manipulator als Ganzes die Störanfälligkeit, die erforderlichen Rüstzeiten und damit auch die Verweilzeit im Reaktordruckbehälter vermindert werden können und somit seine Bedienbarkeit und Servicefreundlichkeit insgesamt verbessert wird.

Zur Lösung dieser Aufgabe sind gemäss der Erfindung folgende Massnahmen vorgesehen:

a) der Mast ist über seine ganze Länge mit zwei diametral angeordneten Führungsschienen versehen;

b) der Support besteht aus einem den Mast manschettartig umgebenden, längs der Führungsschienen mit Rollen geführten und am Mast verspannbaren Rohrstück, an dem ein feststehender Tragring befestigt ist, wobei an dem feststehenden Tragring ein drehbarer Tragring gelagert ist, der das um den Support drehbare Tragorgan und die Antriebe für das Tragorgan trägt;

c) der Mast ist über seine Länge mit einem im Querschnitt U-förmigen, zu den Seiltrommeln um 90° versetzten Kanal versehen, in den eine die Energie- und Steuerleitungen für den Support und das Tragorgan aufnehmende und mit ihrem einen Ende am Support fixierte Kabelführungskette geführt ist;

d) das Mastlager besteht aus einem im wesentlichen hohlzylindrischen Körper, der auf einer der Plattform zugeordneten Unterkonstruktion aufsitzt, der weiterhin mit zwei auf seiner Innenseite diametral angeordneten Rollenführungen für die längs des Mastes angeordneten Führungsschienen versehen ist und der zur form- oder kraftschlüssigen axialen Fixierung des Mastes eine Haltevorrichtung aufweist;

e) die beiden Seiltrommeln für den Antrieb des Supports sind mit ihren Achsen parallel zu den Hauptträgern der Hilfsbrücke unterhalb der Plattform in der Unterkonstruktion angeordnet und zur Bildung zweier voneinander unabhängig antreibbarer Seilwinden jeweils für sich mit einem Seil bestückt, das mit seinem freien Ende direkt an einer Traglasche des Supports befestigt ist;

f) in der Manipulatorbrücke ist in Höhe der Unterkonstruktion zwischen den beiden Seiltrommeln eine waagrechte, von dem U-förmigen Kanal des Mastes wegweisende Führungsbahn für die Kabelführungskette vorgesehen;

g) an die Manipulatorbrücke ist in Längsrichtung der Hilfsbrücke ein auf die Hilfsbrücke aufsetzbarer Kabelspeicher ankoppelbar, der eine antreibbare Spule zum Auf- und Abspulen der Kabelführungskette enthält.

Bei einer derartigen Ausgestaltung des Manipulators kann dieser zum Zwecke des Transportes und der Montage in mehrere funktionsfähige Einheiten gegliedert werden, die beim Auf- und Abbau des Manipulators sowie während des Betriebes leicht zugänglich sind. Diese Einheiten sind die Manipulatorbrücke ohne unteren Laufsteg, Mastauflage und obere Plattformgeländer, aber mit dem unterhalb der Unterkonstruktion eingehängten Support einschliesslich Ausleger und Seilwinde für den Support, der untere Laufsteg mit der Mastlagerung und dem oberen Plattformgeländer, der Kabelspeicher mit Kabeltrommel, Kabelführungskette und Antrieb für Kabeltrommel und Kabelführungskette, das Mastschussgestell mit den verschiedenen Mastschüssen und ein an die Manipulatorbrücke fahrbarer Servicewagen. Diese Funktionseinheiten werden beim Aufbau des Manipulators wie folgt gehandhabt:

1. Auf einem Vormontageplatz werden auf die Manipulatorbrücke der untere Laufsteg, das Mastauflager und das obere Plattformgeländer aufgesetzt.

2. Die so komplettierte Manipulatorbrücke wird auf die im Reaktorgebäude vorhandene Hilfsbrükke aufgesetzt.

3. Anschliessend wird der Kabelspeicher auf die Hilfsbrücke aufgesetzt und an die Manipulatorbrücke angekoppelt.

4. Als nächstes wird das Mastschussgestell mit den Mastschüssen auf die Hilfsbrücke aufgesetzt.

5. Danach erfolgt die Montage der Mastschüsse mit Hilfe des Hallenkranes oder auch mit Hilfe eines auf die Manipulatorbrücke aufsetzbaren Säulendrehkranes.

6. Anschliessend wird der Servicewagen in die Hilfsbrücke eingehängt.

7. Einführen der Kabelführungskette in die waagrechte Führungsbahn und in die U-förmige Ausnehmung des Mastes sowie Ankuppeln der Kabelführungskette am Support und Verbinden der Kabelkupplungen.

8. Lösen der Transportsicherung des Supports.

9. Verbindung des Kabelspeichers mit den Steuerungseinrichtungen des Manipulators und Abfahren des Testprogrammes.

10. Zentrieren des Manipulators im Reaktordruckbehälter durch Verfahren der Hilfsbrücke und der Manipulatorbrücke.

Für den gemäss der Erfindung ausgebildeten Manipulator ist also charakteristisch, dass die Steuerung der Antriebsaggregate des am Support befestigten Tragorgans über Leitungen erfolgt, die in eine Kabelführungskette integriert sind, und dass die Gesamtkonstruktion des Manipulators die Führung dieser Kabelführungskette problemlos ermöglicht. Die hierfür wesentlichen Konstruktionsmerkmale sind die U-förmige Ausnehmung des Mastes und die für die obere Plattform der Manipulatorbrücke vorgesehene Unterkonstruktion, die in spezieller Zuordnung die Elemente für die Halterung des Mastes und für den Antrieb des Supports aufnimmt. Die U-förmige Ausnehmung des Mastes besteht dabei zweckmässig aus einem in einen Längsschlitz des rohrförmigen Mastes bzw. der einzelnen Mastschüsse eingeschweissten Blechteilen, während für die Unterkonstruktion der oberen Plattform der Manipulatorbrücke Träger vorgesehen sind, die von den vier Beinen der tischartigen Manipulatorbrücke zu deren Mitte hin verlaufen und an einem sechseckigen, mit einer Bohrung für den Mast versehenen Tragkastenenden, dessen eine Diagonale parallel zu den Hauptträgern der Hilfsbrücke verläuft.

Kabelführungsketten sind an sich bekannt (DE-A-1 935 360).

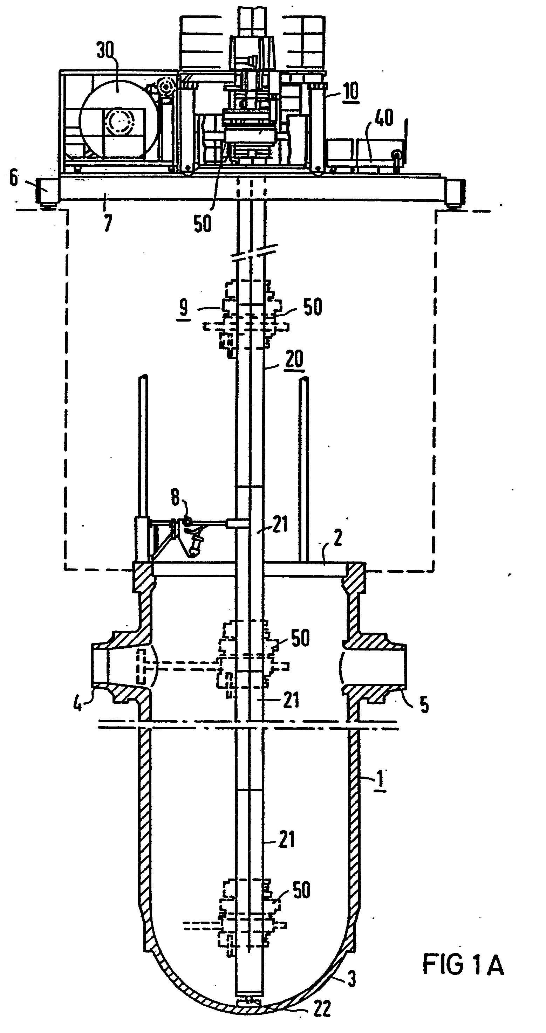

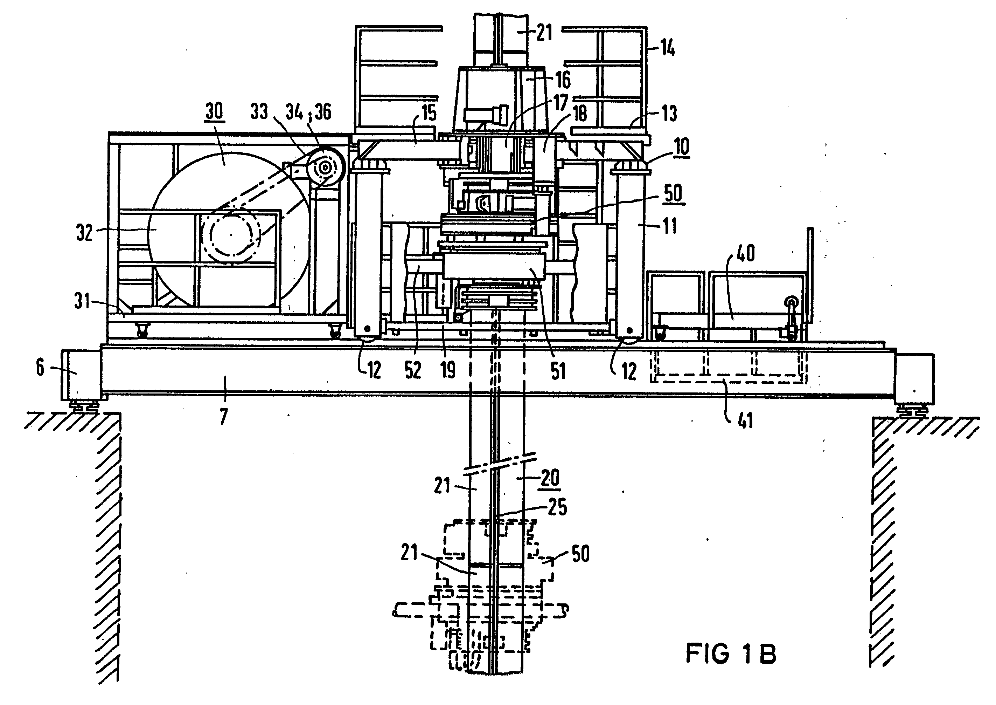

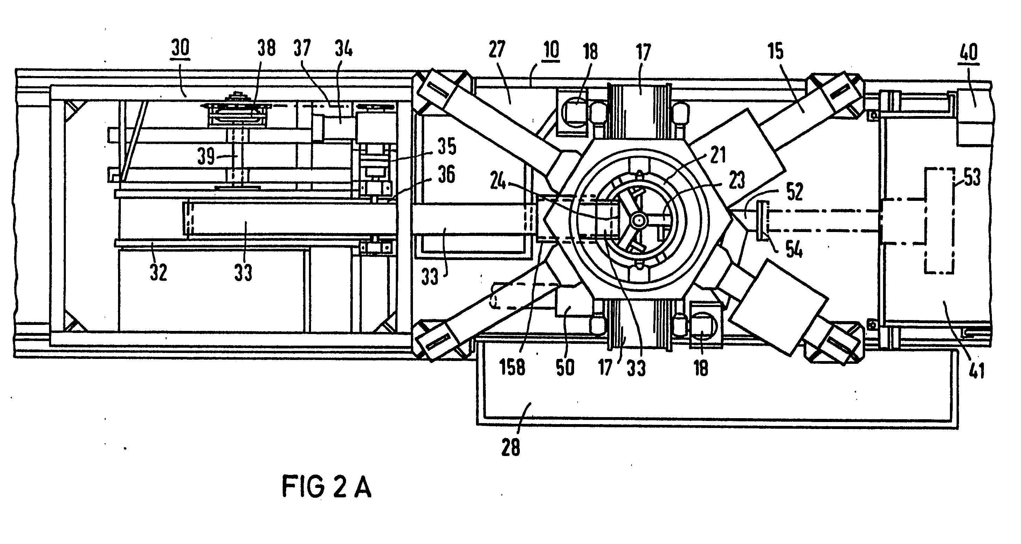

Ein Ausführungsbeispiel des neuen Manipulators als Ganzes ist in Fig. 1A/1B dargestellt, während in den Fig. 2A und 2B sowie 3 bis 13 einzelne Funktionseinheiten im Detail dargestellt sind.

Fig. 1A zeigt in einer Gesamtansicht einen Reaktordruckbehälter 1 mit einem zugeordneten Zentralmastmanipulator 9. Beim Reaktordruckbehälter 1, der den kalottenförmigen Bodenbereich 3 und die Kühlwasseranschlussstutzen 4 und 5 aufweist, ist der Deckel abgenommen, so dass der Druckbehälter durch die obere Öffnung 2 zugänglich ist. In den Reaktordruckbehälter ist ein Mast 20 eingefahren, der mit einem Fussteil 22 auf der Bodenkalotte 3 aufsitzt. Dieser Mast 20 wird an seinem oberen Ende von einer Manipulatorbrücke 10 gehalten, die auf die Träger 7 einer Hilfsbrücke 6 aufgesetzt ist, die ihrerseits im nicht näher bezeichneten Reaktorgebäude senkrecht zur Zeichenebene verfahrbar ist. Dabei sind die Träger 7 als Schienen ausgebildet, auf denen die Manipulatorbrücke 10 mit einem zugeordneten Kabelspeicher 30 und einem ebenfalls zugeordneten Servicewagen 40 parallel zur Zeichenebene verfahrbar sind.

Zur Zentrierung des Mastes 20, der aus mehreren Mastschüssen 21 besteht, im Reaktordruckbehälter kann eine Zentriereinrichtung 8 vorgesehen sein, die auf den Flansch der Öffnung 2 aufgesetzt ist. Diese Zentriereinrichtung ist insbesondere dann vorzusehen, wenn der Mast nicht im Reaktorbehälter abgestützt werden kann und somit in der Manipulatorbrücke hängend gelagert ist.

Für Inspektions-, Reparatur- und Messzwecke ist ein Support 50 vorgesehen der längs des Mastes 20 verfahrbar ist und der mit einem Tragorgan für eine Reparatur-, Mess-, Inspektions- oder Prüfeinrichtung versehen ist.

Gemäss Fig. 1B, in der die Manipulatorbrücke gesondert dargestellt ist, besteht diese aus einer tischartigen Konstruktion 10 mit vier Beinen 11, an deren unteren Enden die Räder 12 vorgesehen sind. Im oberen Teil dieser tischartigen Konstruktion ist die Tischplatte bzw. obere Plattform 13 vorgesehen, die mit einem Geländer 14 versehen ist. Unter dieser Tischplatte befindet sich eine Unterkonstruktion 15, auf der das Mastlager 16 aufsitzt und in der Seiltrommeln 17 mit zugeordneten Antrieben 18 für die Hubbewegung des Supports 50 gelagert sind. Der Support 50 ist mit einem Tragorgan 51 versehen, in dem ein Ausleger 52 gelagert ist. Die Manipulatorbrücke ist im unteren Bereich im übrigen mit Quer- bzw. Versteifungsträgern 19 versehen, auf denen eine hier nicht näher bezeichnete untere Plattform aufliegt.

Der aus einzelnen Mastschüssen 21 bestehende Mast 20 ist im übrigen mit zwei diametral gegenüberliegenden Führungsschienen 25 versehen, auf denen der Support 50 geführt wird.

Auf der Hilfsbrücke 6 ist an der einen Seite der Manipulatorbrücke 10 der Kabelspeicher 30 angeordnet, der im wesentlichen aus einem Wagen 31 mit der darauf gelagerten Spule 32 besteht. Auf diese Spule ist eine Kabelführungskette 33 aufwickelbar, wobei zum Auf- und Abwickeln ein Antrieb 34, 36 vorgesehen ist, der die Kabelführungskette 33 direkt antreibt.

Der auf der anderen Seite der Manipulatorbrücke 10 angeordnete Servicewagen 40 ist so gestaltet, dass sich seine Standfläche 41 unterhalb der auf den Querverstrebungen 19 der Manipulatorbrücke angeordneten unteren Plattform befindet, um eine günstige Zugangsposition zu der am Support 50 jeweils befestigten Prüf-, Mess- oder Reparatureinrichtung zu haben. Dabei ist der Support 50 infolge der tischartigen Ausgestaltung der Manipulatorbrücke 10 von unten her vollständig in die Manipulatorbrücke einfahrbar.

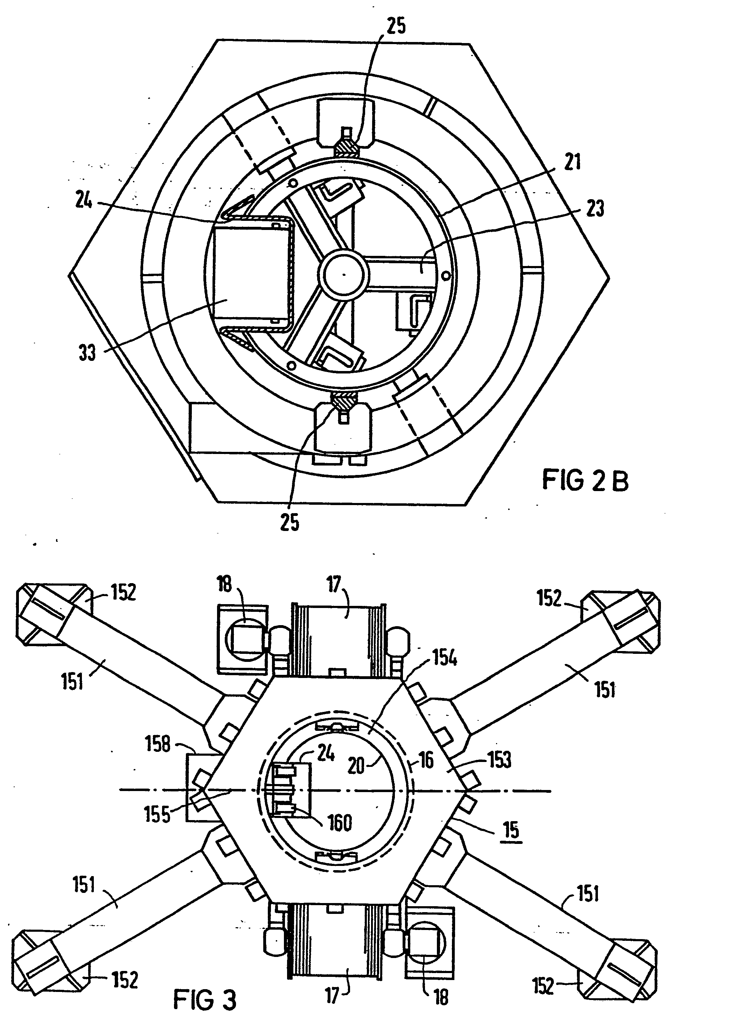

Die in den Fig. 2A und 2B dargestellte Draufsicht auf die Manipulatorbrücke verdeutlicht weitere Details der Gesamtkonstruktion. So ist bezüglich des Kabelspeichers 30 erkennbar, dass die auf die Spule 32 aufwickelbare Kabelführungskette 33 vom Antrieb 34 über eine Kupplung 35 und ein Antriebsrad 36 angetrieben wird, während gleichzeitig über einen Antriebsriemen 37 und eine Kupplung 38 und die Welle 39 ein Antrieb der Spule 32 erfolgt.

Bezüglich des Servicewagens 40 ist erkennbar, dass sich die am Ende des Auslegers 52 des Supports 50 angeordnete Mess-, Prüf- oder Reparatureinrichtung 53 im Bereich des Servicewagens oberhalb der Standfläche 41 befindet und an einem Flansch 54 vom Ausleger 52 abmontiert werden kann.

Die Manipulatorbrücke 10 selbst ist ohne die obere Plattform dargestellt, so dass die Unterkonstruktion 15, die auf dem Trägersystem 19 befindlichen unteren Plattformen 27 und 28 sowie ein einzelner Mastschuss 21 erkennbar sind. Unter zusätzlicher Berücksichtigung der Fig. 2B ist dabei erkennbar, dass jeder Mastschuss 21 an seinem oberen und seinem unteren Ende mit einem Tragstern 23 versehen ist, der zur gegenseitigen Verriegelung der einzelnen Mastschüsse dient. Weiterhin ist erkennbar, dass die einzelnen Mastschüsse auf ihrer Aussenseite mit zwei diametral gegenüberliegenden Führungsschienen 25 versehen sind, die in entsprechende Gegenführungen eingreifen. Weiterhin ist erkennbar, dass der einzelne, aus einem Rohr bestehende Mastschuss mit einem Schlitz versehen ist, in den ein U-förmiger Blechkanal 24 eingeschweisst ist, der zur Führung der Kabelführungskette 33 dient.

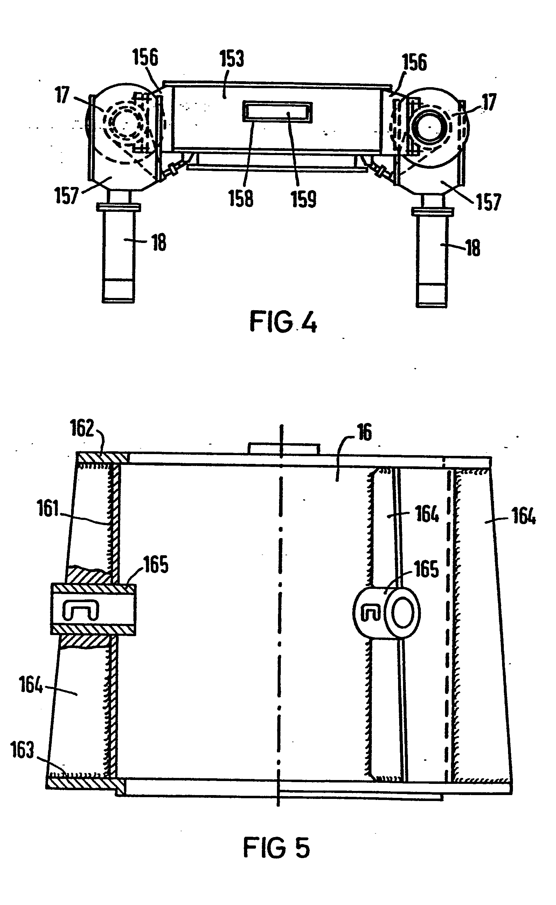

Die Fig. 3 und 4 zeigen in gesonderter Darstellung in Draufsicht und Seitenansicht die Unterkonstruktion 15, die das Mastlager 16 und die Seiltrommeln 17 mit den zugeordneten Antrieben 18 aufnimmt. Diese Unterkonstruktion besteht aus vier diagonal zur oberen Tischplatte der Manipulatorbrücke verlaufenden Trägern 151, die an ihren äusseren Enden mit Befestigungslaschen 152 zur Fixierung der Träger an den Beinen 11 der tischartigen Manipulatorbrücke versehen sind und die mit ihren inneren Enden an den Seitenflächen eines sechseckigen Tragkastens 153 befestigt sind. Dieser Tragkasten ist mit einer Bohrung bzw. Durchführung 154 für den Mast 20 versehen. Der Tragkasten 153 ist dabei derart angeordnet, dass seine Diagonale 155 parallel zu den Trägern 7 der Hilfsbrücke 6 verläuft. Dadurch ist erreicht, dass jeweils zwei Träger 151 auf zwei einander benachbarten Seitenflächen des sechseckigen Tragkastens 153 enden, während im Bereich der beiden anderen Seitenflächen die sich gegenüberliegenden Seiltrommeln 17 angeordnet sind. Insgesamt ist die Konstruktion so gewählt, dass der U-förmige Führungskanal 24 des Mastes 20 im Bereich des Tragkastens 153 um 90° versetzt zu den Seiltrommeln 17 angeordnet ist.

Gemäss Fig. 4 sind die Seiltrommeln 17 mit den zugeordneten Antrieben 18 und den Getriebekästen 157 über die Tragbleche 156 an dem sechseckigen Tragkasten 153 befestigt. Weiterhin ist zur Einführung der Kabelführungskette durch den Tragkasten hindurch in den U-förmigen Blechkanal 24 ein rechteckiger Führungskanal 159 vorgesehen, der in einen Schlitz 158 des Tragkastens 153 eingeschweisst ist. Dieser Führungskanal ist auch mit Umlenkrollen 160 zur Umlenkung der Kabelführungskette aus der Horizontalen in die Vertikale versehen. Er verläuft im übrigen horizontal und damit parallel und symmetrisch zur Achse 155.

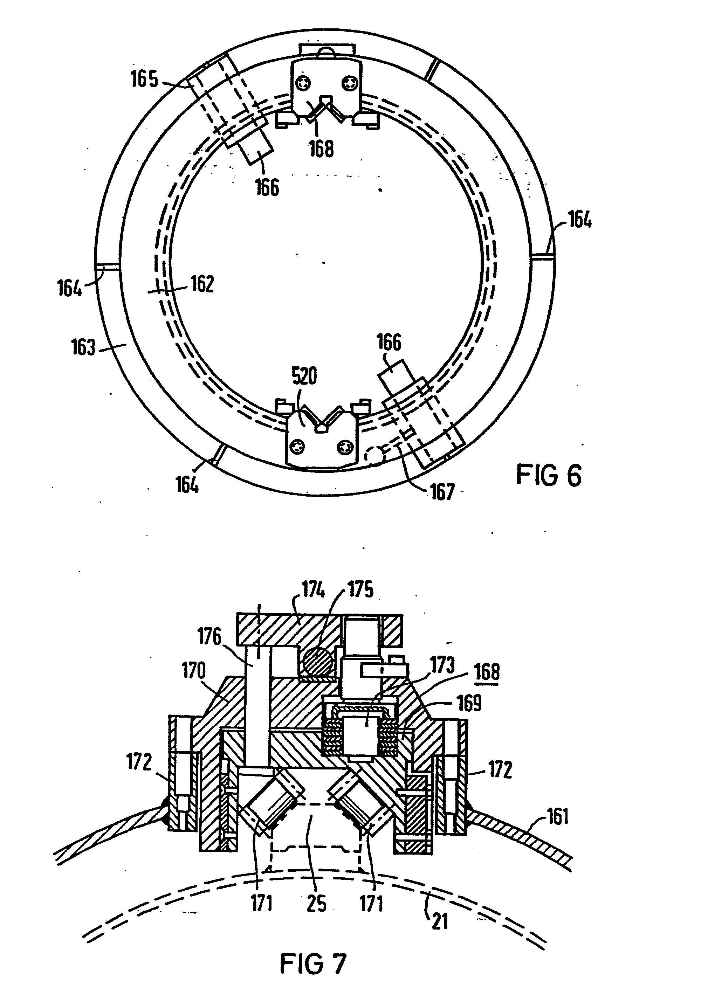

Das auf der Unterkonstruktion 15 aufsitzende Mastlager ist in den Fig. 5 und 6 in einem Halbschnitt sowie in Draufsicht dargestellt. Danach besteht das Mastlager aus einem zylindrischen Rohrstück 161, das mit einem oberen Ringkragen 162 und einem unteren Ringkragen 163 versehen und mit Rippen 164 versteift ist. In der Wand des Rohrstückes 161 sowie in Verbindung mit den Rippen 164 sind horizontale Führungsbuchsen 165 angeordnet, in denen Bolzen 166 verschiebbar und verriegelbar mit Hilfe eines Führungshebels 167 angeordnet sind. Diese Bolzen können in entsprechende Löcher in den einzelnen Mastschüssen 21 des Mastes 20 eingreifen und damit den Mast als Ganzes – insbesondere beim Zusammenbau – in vertikaler Richtung fixieren. Diese Führungsbuchsen und Bolzen, die bei hängender Betriebsweise des Mastes zugleich zur vertikalen Lagerung des Mastes dienen, bilden eine Haltevorrichtung zur axialen Fixierung des Mastes. Anstelle einer formschlüssig wirkenden Haltevorrichtung, beispielsweise auch in Form einer Klinkenkonstruktion oder eines Gesperres, kommt auch eine kraftschlüssig wirkende Haltevorrichtung in Betracht, beispielsweise in Form einer Bremse.

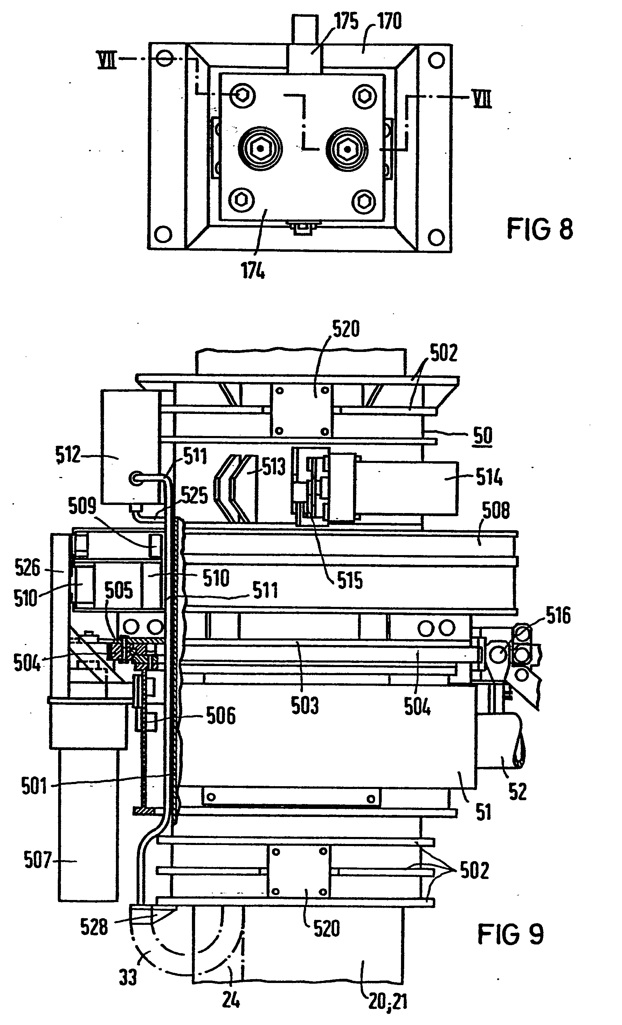

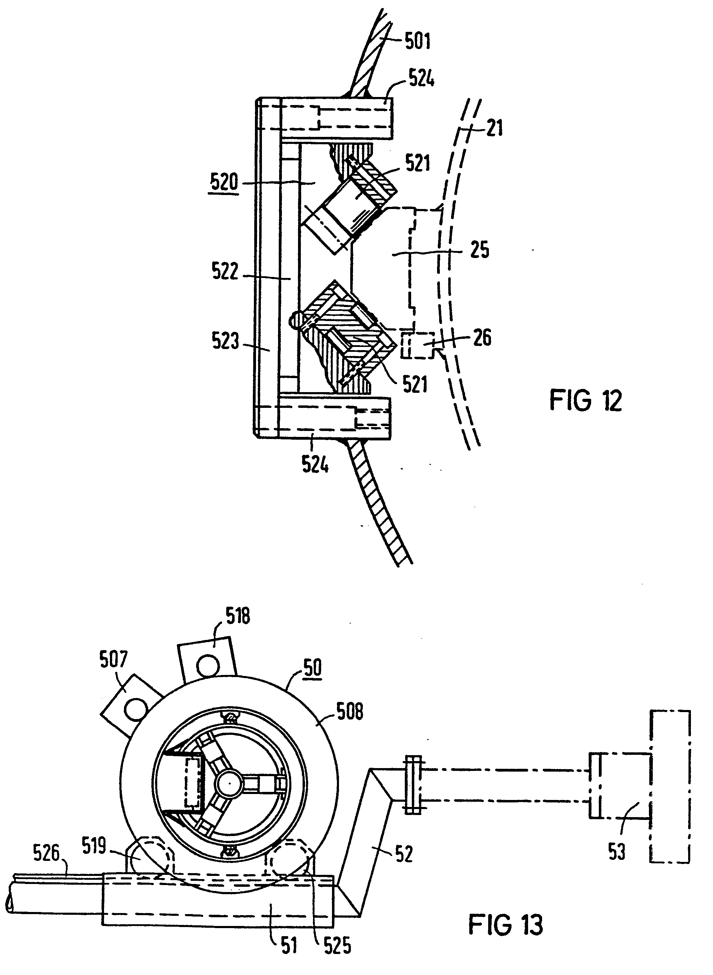

Am Rohrstück 161 des Mastlagers 16 sind sich diametral gegenüberliegend eine federnde Rollenführung 168 und eine feststehende Rollenführung 520 angeordnet, in die beim Einführen der Mastschüsse in das Mastlager die Führungsschienen 25 der Mastschüsse eingreifen. Von diesen handelsüblichen Rollenführungen besteht die federnde Rollenführung 168 gemäss den Fig. 7 und 8 aus zwei Rollenkörpern 171, die an einer Tragplatte 169 befestigt sind. Diese Tragplatte ist u. a. mit Hilfe einer Federung 173 federnd in der Grundplatte 170 gelagert. Die Grundplatte 170 ist an Haltestücken 172 befestigt, die in einen Schlitz des zylindrischen Rohrstückes 161 des Mastlagers eingeschweisst sind. Zum Zurückziehen der federnden Rollenkörper 171 beim Einsetzen des ersten Mastschusses ist ein Exzenterbolzen 175 vorgesehen, der in der Platte 174 geführt ist. An dieser Platte sind Bolzen 176 befestigt, die die Tragplatte 169 hintergreifen. Die feststehende Rollenführung ist weiter unten anhand der Fig. 12 beschrieben.

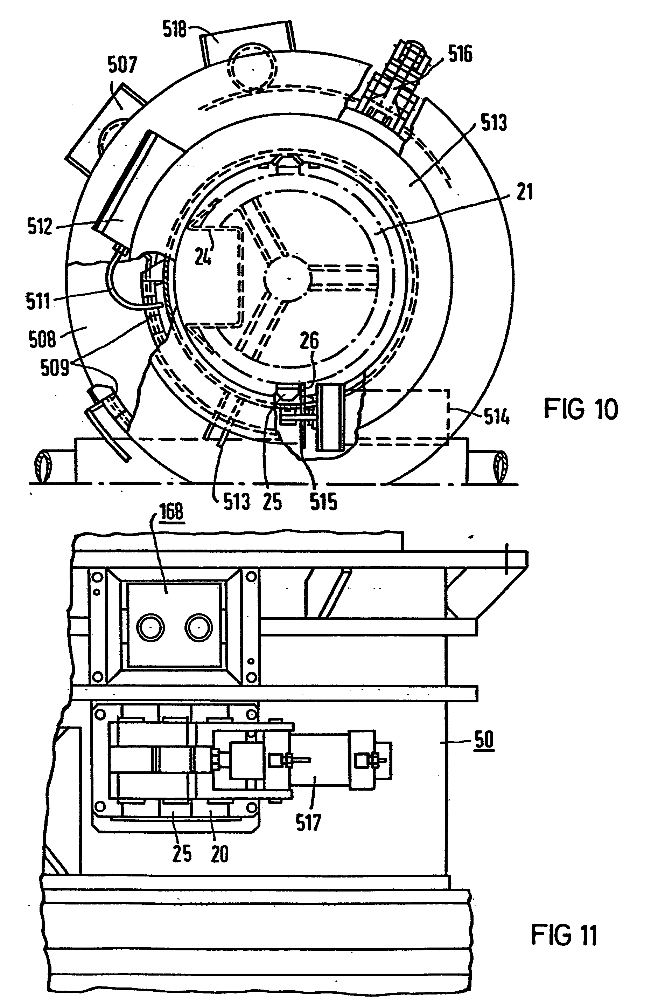

Gemäss den Fig. 9 und 10 ist ein wesentlicher Bestandteil des Supports 50 ein zylindrisches Rohrstück 501, das mit Ringrippen 502 verstärkt und versteift ist. Dieser Grundkörper trägt alle übrigen Teile des Supports und umgibt den Mast 20 einschliesslich des U-förmigen Blechkanals 24, in den die Kabelführungskette 33 eingelassen ist. Diese ist im übrigen am unteren Ende des Supports an einer Traglasche 528 fixiert, wobei nicht näher bezeichnete Steckverbindungen für die in der Kabelkette geführten Versorgungsleitungen am Übergang von der Kabelführungskette zum Support vorgesehen sind. Beim Betrieb des Zentralmastmanipulators ist im übrigen die Kabelführungskette 33 im wesentlichen mit ihrer ganzen Länge in den U-förmigen Blechkanal 24 eingelassen, so dass sich je nach Stellung des Supports am unteren Ende des Supports eine mehr oder weniger grosse Schlaufe der Kabelführungskette 33 ergibt.

An dem Rohrstück 501 des Supports 50 ist ein feststehender Tragring 503 befestigt, der einen Zahnkranz 504 trägt. An der Innenseite des Zahnkranzes ist über ein Kugellager 505 der um das Rohrstück 501 drehbare Tragring 506 gelagert, der u. a. das Tragorgan 51 für den Ausleger 52 trägt. Weiterhin ist an diesem drehbaren Tragring der Motor 507 befestigt, der mit seinem Ritzel in den Zahnkranz 504 eingreift. Dem Motor 507 ist im übrigen ein Geber 518 (s. Fig. 10) für die Positionserfassung bei der Drehbewegung des drehbaren Tragringes 506 zugeordnet. Weiterhin ist an dem drehbaren Tragring 506 eine Brems- und Feststelleinrichtung 516 befestigt, die klauenartig am Zahnkranz 504 angreift.

Mit dem Gehäuse 501 des Supports 50 ist weiterhin ein ringförmiger Kasten 508 verbunden, in dem übereinander zwei Kabelführungsketten 509 und 510 angeordnet sind, deren Versorgungsleitungen 525 einerseits über den Schaltkasten 512 und die Verbindungsleitung 511 mit der Kabelführungskette 33 und andererseits über die Verbindungseinrichtung 526 mit den auf dem drehbaren Tragring 506 angeordneten Aggregaten verbunden sind.

Am Gehäuse 501 des Supports 50 sind weiterhin an zwei sich gegenüberliegenden Positionen die Traglaschen 513 vorgesehen, an denen jeweils das eine freie Ende der auf den Seiltrommeln 17 aufgewickelten Seile für das Heben und Senken des Supports befestigt ist. Weiterhin ist in Höhe dieser Traglaschen ein Geber 514 vorgesehen, der mit einem Zahnrad 515 in eine neben einer Führungsschiene 25 des Mastes 20 angeordnete Zahnstange 26 (s. Fig. 10) eingreift und damit die jeweilige Höhenposition des Supports 50 erfasst.

Gegenüberliegend zum Geber 514 ist gemäss Fig. 11 die Klemmeinrichtung 517 angeordnet, die hydraulisch betätigbar ist und Klemmbacken aufweist, welche der Führungsschiene 25 des Mastes 20 zugeordnet sind. Mit dieser Klemmeinrichtung wird der Support in der jeweiligen jeweils gewünschten Höhenposition arretiert.

Am Gehäuse 50 des Supports sind am oberen und unteren Ende sich diagonal gegenüberliegend je zwei Rollenführungen angeordnet, die den beiden Führungsschienen 25 des Mastes 20 zugeordnet sind. Dabei sind die der einen Führungsschiene zugeordneten Rollenführungen in gleicher Weise federnd ausgebildet wie die Rollenführung 168 im Mastlager 16, während die beiden der anderen Führungsschiene zugeordneten Rollenführungen 520 gemäss Fig. 12 starr bzw. feststehend ausgebildet sind. Die hierzu vorgesehenen Rollenkörper 521 befinden sich in einer Tragplatte 522, die mittels einer Grundplatte 523 an Haltestücken 524 fixiert ist, welche in eine Ausnehmung des Rohrstückes 501 eingeschweisst sind.

Gemäss Fig. 13, die den Support 50 von oben darstellt, ist für den Tragorgan 51 zugeführten Ausleger 52 mit der Prüfeinrichtung 53 ein Hubantrieb 519 vorgesehen, dessen Ritzel in die Zahnstange 526 eingreift und dem ein Lineargeber 525 zugeordnet ist.

## Patentansprüche

1. Manipulator zur Durchführung von Messungen, Prüfungen, Untersuchungen und Reparaturen im Inneren eines in einem Reaktorgebäude angeordneten, oben offenen Reaktordruckbehälters, bestehend

— aus einer auf eine Hilfsbrücke des Reaktorgebäudes aufsetzbaren und in Längsrichtung der Hilfsbrücke verfahrbaren Manipulatorbrücke, deren erhöht angeordnete, tischartige Plattform ein Mastlager für einen drehfest in den Druckbehälter ragenden, dort gegebenenfalls abstellbaren Mast trägt,

— aus einem am Mast mittels einer Lasthebeeinrichtung verfahrbaren Support,

— und aus einem am Support befestigten Tragorgan zur Aufnahme der Mess-, Prüf-, Inspektions- oder Reparatureinrichtungen, wobei die Lasthebeeinrichtung aus zwei im Bereich der Plattform tangential und symmetrisch zum Mast angeordneten antreibbaren Seiltrommeln besteht, deren Seile mit ihrem einen Ende am Support befestigt sind, dadurch gekennzeichnet,

a) dass der Mast (20) über seine ganze Länge mit zwei diametral angeordneten Führungsschienen (25) versehen ist,

b) dass der Support (50) aus einem den Mast (20) manschettenartig umgebenden, längs der Führungsschienen mit Rollen (521) geführten und am Mast verspannbaren Rohrstück (501) besteht, an dem ein feststehender Tragring (503) befestigt ist, wobei an dem feststehenden Tragring ein drehbarer Tragring (506) gelagert ist, der das um den Support (50) drehbare Tragorgan (51) und die Antriebe (507, 519) für das Tragorgan trägt,

c) dass der Mast (20) über seine ganze Länge mit einem im Querschnitt U-förmigen, zu den Seiltrommeln (17) um 90° versetzten Kanal (24) versehen ist, in den eine die Energie- und Steuerleitungen für den Support und das Tragorgan aufnehmende und mit ihrem einen Ende am Support fixierte Kabelführungskette (33) geführt ist,

d) dass das Mastlager (16) aus einem im wesentlichen hohlzylindrischen Körper (161, 162, 163) besteht, der auf einer der Plattform zugeordneten Unterkonstruktion aufsitzt, der weiterhin mit zwei auf seiner Innenseite diametral angeordneten Rollenführungen für die längs des Mastes (20) angeordneten Führungsschienen (25) versehen ist und der zur form- oder kraftschlüssigen axialen Fixierung des Mastes (20) eine Haltevorrichtung (165, 166) aufweist,

e) dass die beiden Seiltrommeln für den Antrieb des Supports mit ihren Achsen parallel zu den Hauptträgern (7) der Hilfsbrücke (6) unterhalb der Plattform (13) in der Unterkonstruktion (15) angeordnet und zur Bildung zweier von einander unabhängig antreibbarer Seilwinden jeweils für sich mit einem Seil bestückt sind, das mit seinem freien Ende direkt an einer Traglasche (513) des Supports (50) befestigt ist,

f) dass in der Manipulatorbrücke (10) in Höhe der Unterkonstruktion (15) zwischen den beiden Seiltrommeln (17) eine waagrechte, von dem U-förmigen Kanal (24) des Mastes wegweisende Führungsbahn (158) für die Kabelführungskette (33) vorgesehen ist, und

g) dass an die Manipulatorbrücke (10) in Längsrichtung der Hilfsbrücke (6) ein auf die Hilfsbrücke aufsetzbarer Kabelspeicher (30) ankoppelbar ist, der eine antreibbare Spule (32) zum Auf- und Abspulen der Kabelführungskette (33) enthält.

2. Manipulator nach Anspruch 1, dadurch gekennzeichnet, dass im Kabelspeicher (30) für die Kabelführungskette ein Direktantrieb (34, 35, 36) vorgesehen ist, der über eine Kupplung (38) auch mit der Welle (39) der Spule (32) gekoppelt ist.

3. Manipulator nach Anspruch 1 oder 2, dadurch gekennzeichnet, dass die Kabelführungskette (33) mit ihrem einen Ende am unteren Ende des Supports (50) befestigt ist.

4. Manipulator nach einem der Ansprüche 1 bis 3, dadurch gekennzeichnet, dass die Unterkonstruktion (15) der Plattform (13) aus Trägern (151) besteht, die von den vier Beinen (11) der tischartigen Manipulatorbrücke zu deren Mitte hin verlaufen und an einem sechseckigen, mit einer Bohrung (154) für den Mast (20, 21) versehenen Tragkasten (153) enden, dessen eine Diagonale (155) parallel zu den Hauptträgern (7) der Hilfsbrücke (6) verläuft.

5. Manipulator nach einem der Ansprüche 1 bis 4, dadurch gekennzeichnet, dass längs des Mastes (20) eine Zahnstange (26) angeordnet ist, in die ein am Support (50) befestigter Geber (514, 518) zur Erfassung der Höhenposition des Supports eingreift.

6. Manipulator nach einem der Ansprüche 1 bis 5, dadurch gekennzeichnet, dass am Support (50) eine Klemmeinrichtung (517) angeordnet ist, deren Klemmbacken der einen Führungsschiene (25) des Mastes (20, 21) zugeordnet sind.

7. Manipulator nach einem der Ansprüche 1 bis 6, dadurch gekennzeichnet, dass die Haltevorrichtung aus wenigstens einem Steckbolzen (166) besteht, der in einer am hohlzylindrischen Körper befestigten Buchse (165) radial zum Mast geführt und in ein entsprechendes Loch des Mastes einsteckbar ist.

**Claims**

1. A manipulator for carrying out measurements, tests, inspections and repairs inside a reactor pressure vessel which is open at the top and disposed in a reactor building, consisting of:
– a manipulator bridge which can be placed on an auxiliary bridge of the reactor building and moved in the longitudinal direction of the auxiliary bridge and the raised table-like platform of which carries a mast mounting for a mast which extends into the pressure vessel without turning and can be stopped there if necessary,
– a support which can be moved on the mast by means of a lifting arrangement,
– and a carrier fixed to the support to accommodate the measuring, testing, inspection or repair equipment,
and wherein the lifting equipment consists of two powered cable drums disposed tangentially and symmetrically to the mast on the area of the platform, the cables of which are fixed to the support at one end, characterized in that

a) over its entire length the mast (20) is provided with two diametrically arranged guide rails (25),

b) the support (50) consists of a piece of tube (501) which surrounds the mast (20) like a sleeve, is guided along the guide rails with rollers (521) and can be locked on the mast, and to which a stationary supporting ring (503) is fixed, and mounted on the stationary supporting ring is a rotatable supporting ring (506) which carries the carrier (51) and the drives (507, 519) for the carrier rotatably about the support (50),

c) over its entire length the mast (20) is provided with a channel (24) which is of U-shaped cross section and offset at 90° to the cable drums (17) and into which a cable guide chain (33), fixed to the support at one end and accomodating the power and control cables for the support and the carrier, is guided,

d) the mast mounting (16) consists of a substantially hollow cylindrical body (161, 162, 163) which sits on a substructure associated with the platform, which again is provided with two roller guides disposed diametrically on its inside for the guide rails (25) disposed along the mast (20) and which exhibits a holding device (165, 166) for positive or frictional axial locking of the mast (20),

e) the two cable drums driving support are disposed with their axes parallel to the main members (7) of the auxiliary bridge (6) underneath the platform (13) in the substructure (15), and to form two independently drivable cable winches, are each fitted with their own cable which is attached at its free end directly to a supporting bracket (513) of the support (50),

f) a horizontal guiding track (158) leading away from the U-shaped channel (24) in the mast is provided for the cable guiding chain (33) in the manipulator bridge (10) level with the substructure (15) between the two cable drums (17), and

g) a cable store (20) which can be placed on the auxiliary bridge and comprises a drum (32) which can be powered to wind in and wind out the cable guiding chain (33), can be coupled to the manipulator bridge (10) in the longitudinal direction of the auxiliary bridge (6).

2. A manipulator as claimed in claim 1, characterized in that the cable store (30) for the cable guiding chain is provided with a direct drive (34, 35, 36) which is also coupled to the shaft (39) of the drum (32) by means of a clutch (38).

3. A manipulator as claimed in claims 1 or 2, characterized in that the cable guiding chain (33) is fixed at one end to the lower end of the support (50).

4. A manipulator as claimed in one of claims 1 to 3, characterized in that substructure (15) of the platform (13) consists of members (151) which run from the four legs (11) of the table-like manipulator bridge to its centre and terminate at a hexagonal supporting box (153) which is provided with a bore (154) for the mast (20, 21) whose one diagonal (155) runs parallel to the main members (7) of the auxiliary bridge (6).

5. A manipulator as claimed in one of claims 1 to 4, characterized in that a toothed rack (26) is disposed along the mast (20) and engages with a sensor (514, 518) fixed to the support (50) to detect the vertical position of the support.

6. A manipulator as claimed in one of claims 1 to 5, characterized in that a clamping arrangement (517) is disposed on the support (50) with clamping jaws which cooperate with one guiding rail (25) of the mast (20, 21).

7. A manipulator as claimed in one of claims 1 to 6, characterized in that the holding device consists of at least one pin (166) which is guided in a bush (165) fixed to the hollow cylindrical body radial to the mast and can be inserted in a corresponding hole in the mast.

**Revendications**

1. Manipulateur pour effectuer des mesures, des vérifications, des inspections et des réparations à l'intérieur d'une cuve sous pression de réacteur, ouverte en haut et disposée dans un bâtiment de réacteur, constitué

– d'un pont de manipulateur, qui peut être posé sur un pont auxiliaire du bâtiment du réacteur, qui peut être déplacé dans la direction longitudinale du pont auxiliaire et dont la plate-forme, de type à table et surélevée, porte un palier de mât pour un mât pénétrant sans possibilité de tourner dans la cuve sous pression et pouvant y être éventuellement déposé,

– d'un support pouvant être déplacé sur le mât au moyen d'un dispositif de soulèvement d'une charge,

– et d'un organe porteur, qui est fixé à un support et qui est destiné à recevoir des dispositifs de mesure, de vérification, d'inspection ou de réparation, le dispositif de soulèvement d'une charge étant constitué de deux tambours à câble susceptibles d'être entraînés, disposés tangentiellement dans la région de la plate-forme et symétriquement par rapport au mât et dont les câbles sont fixés par l'une de leurs extrémités au support, caractérisé en ce que:

a) le mât (20) est muni sur toute sa longueur de deux rails de guidage (25) diamétralement opposés, _____

b) le support (50) est constitué d'une pièce tubulaire (501) entourant le mât (20) à la manière d'un manchon, guidée par des galets (521) le long des rails de guidage, pouvant être bloquée sur le mât et à laquelle est fixé un anneau-porteur fixe (503) sur lequel est monté un anneau-porteur tournant (506) qui porte l'organe porteur (51) tournant autour du support (50) et les dispositifs d'entraînement (507, 519) de l'organe porteur,

c) le mât (20) est muni sur toute sa longueur d'un canal (24) de section transversale en forme de U, décalé à 90° par rapport aux tambours à câble (17) et dans lequel est guidée une chaîne porte-câble (33) recevant les conduits d'alimentation en énergie et de commande du support et de l'organe porteur et fixée par l'une de ses extrémités au support,

d) le palier de mât (16) est constitué d'une pièce (161, 162, 163) sensiblement en forme de cylindre creux, qui repose sur une infrastructure associée à la plate-forme, qui, en outre, est munie de deux guidages à galets diamétralement opposés sur son côté intérieur et destinés à guider les rails de guidage (25) disposés le long du mât (20) et qui comporte un dispositif de fixation (165, 166) pour immobiliser axialement le mât (20) par complémentarité de formes ou par coopération de forces,

e) les deux tambours à câble pour l'entraînement du support sont disposés, en ayant leurs axes parallèles aux poutrelles principales (7) du pont auxiliaire (6), en-dessous de la plate-forme (13) dans l'infrastructure (15) et sont munis, chacun pour soi, pour former deux treuils à câbles pouvant être entraînés indépendamment l'un de l'autre, d'un câble dont l'extrémité libre est fixée directement à une éclisse porteuse (513) du support (50),

f) dans le pont de manipulateur (10) il est prévu, au niveau de l'infrastructure (15), entre les deux tambours à câble (17), une voie de guidage (158) horizontale s'écartant du canal (24) en forme de U du mât et destinée à la chaîne porte-câble (33), et

g) au pont de manipulateur (10) pour être accouplé, dans la direction longitudinale du pont auxiliaire (6), un réservoir de câble (30), qui peut être posé sur le pont auxiliaire et qui contient une bobine (32) susceptible d'être entraînée pour enrouler et dérouler la chaîne porte-câble (33).

2. Manipulateur suivant la revendication 1, caractérisé en ce que, dans le réservoir de câble pour la chaîne porte-câble, est prévu un dispositif d'entraînement direct (34, 35, 36) qui est accouplé aussi, par un accouplement (38), avec l'arbre (39) de la bobine (32).

3. Manipulateur suivant la revendication 1 ou 2, caractérisé en ce que la chaîne porte-câble (33) est fixée par l'une de ses extrémités à l'extrémité inférieure du support (50).

4. Manipulateur suivant l'une des revendications 1 à 3, caractérisé en ce que l'infrastructure (15) de la plate-forme (13) est constituée de poutrelles (151) qui s'étendent des quatre pieds (11) du pont de manipulateur, en forme de table, à son milieu, et qui se terminent sur un caisson porteur (153) hexagonal, muni d'un alésage (154) pour le mât (20 et 21), et dont une diagonale (155) s'étend parallèlement aux poutrelles principales (7) du pont auxiliaire (6).

5. Manipulateur suivant l'une des revendications 1 à 4, caractérisé en ce que, le long du mât (20), est disposée une crémaillère (26) dans laquelle engrène un dispositif (514, 518) fixé au support et destiné à détecter la position en hauteur du support.

6. Manipulateur suivant l'une des revendications 1 à 5, caractérisé en ce que, sur le support (50), est monté un dispositif de serrage (517), dont les mâchoires de serrage sont associées à l'un des rails de guidage (25) du mât (20, 21).

7. Manipulateur suivant l'une des revendications 1 à 6, caractérisé en ce que le dispositif de fixation est constitué d'au moins une broche (166) qui est guidée radialement par rapport au mât dans une douille (165) fixée dans une pièce en forme de cylindre creux, et qui peut être enfilée dans un trou correspondant du mât.

0155375

FIG 1A

FIG 1 B

FIG 2 A

**FIG 2 B**

**FIG 3**

FIG.4

FIG 5

165
168
166
164
164
162
163
520
166
164
167

**FIG 6**

174 175
176
170
173 168
169
172 172
161
171 25 171 21

**FIG 7**

0155375

FIG 8

FIG 9

21

FIG 10

FIG 11

FIG 12

FIG 13